# EUROPEAN PATENT APPLICATION

(11) **EP 4 379 753 A1**
(43) Date of publication of application: **05.06.2024**
(21) Application number: 22847786.5
(22) Date of filing: 17.01.2022
(51) Int. Cl.: H01F 1/057, H01F 41/02, C22C 38/06, C22C 38/10, C22C 38/12, C22C 38/16, C22C 33/02, C21D 6/00

(54) **NEODYMIUM-IRON-BORON MAGNET MATERIAL AND PREPARATION METHOD THEREFOR AND APPLICATION THEREOF**

(30) Priority: 29.07.2021 CN 202110866231
(71) Applicant: Fujian Golden Dragon Rare-earth Co., Ltd., Longyan, Fujian 366300 (CN)
(72) Inventor: MOU, Weiguo, Longyan, Fujian 366300 (CN); HUANG, Jiaying, Xiamen, Fujian 361000 (CN); JIANG, Zheng, Longyan, Fujian 366300 (CN)
(74) Representative: karo IP
(86) International application number: PCT/CN2022/072255
(87) International publication number: WO 2023/005165

(57) **Abstract**

The invention discloses a neodymium-iron-boron magnet material, a preparation method and use thereof. The neodymium-iron-boron magnet material comprises the following components of: 28-33 wt% of R, wherein R is a rare earth element, and R comprises 27-31.5 wt% of Nd; 0.30-1.3 wt% of Al; 0.35-0.6 wt% of Cu; more than 0 wt% - less than or equal to 0.74 wt% of Co; 0.98-1.2 wt% of B; 62-69 wt% of Fe, wherein wt% is a percentage of the mass of respective component in the total mass of the neodymium-iron-boron magnet material; the neodymium-iron-boron magnet material comprises Nb, and a mass content of Nb satisfies the following condition: (Pr+Co) wt% ≤ (1+Nb) wt%. In the present invention, by further optimizing the formula of the neodymium-iron-boron magnet material, the coercivity of the neodymium-iron-boron magnet material prepared is significantly improved while maintaining higher remanence and squareness.

## Description

### FIELD OF THE INVENTION

The invention relates to a neodymium-iron-boron magnet material, a preparation method and use thereof.

### BACKGROUND OF THE INVENTION

Permanent magnet materials have been developed as key materials for supporting electronic devices. R-T-B permanent magnet materials have the highest magnetic properties and are used in many fields such as voice coil motors for hard drives, motors for electric vehicles and motors for industry equipment.

How to further improve the comprehensive performance of R-T-B based permanent magnet materials is currently a research direction in this field. For example, Chinese patent document CN110993233A discloses a R-T-B based permanent magnet material, wherein by increasing the content of X (Al\Cu\Ga) and adjusting the content of rare earths to change the ratio of Fe and B, so that a 6:13:1 phase can be formed with only the conventional content of B, a magnet material with excellent magnetic properties is achieved.

Furthermore, for example, Chinese patent document CN111180159A discloses a neodymium-iron-boron permanent magnet material, which consists of the following components in percentage by weight: 29wt% of Nd, 0.1wt% of Tb, 0.4wt% of Dy, 0.4wt% of Cu, 0.5wt% of Al, 0.9wt% of Co, 1wt% of B, 0.25wt% of Nb, and 67.45wt% of Fe; and a specific mass proportion of a Tb_{0.4}Dy_{2.5}-Al_{0.59}-Nd_{89.6}-Cu_{1.4}-Co_{5.1} phase is generated in the intergranular region rare-earth rich phase.

The above formulas are based on the improvement of high Cu and high Al magnet materials, which is mainly because the addition of Cu can effectively improve the coercivity of neodymium-iron-boron magnet materials. However, the enrichment of too much Cu (such as 0.35wt% or more) at the grain boundary will lead to the formation of microcracks in the magnet after sintering,, thus reducing the compactness and strength of the magnet. In the prior art, the addition of Al is generally used (such as Chinese patent document CN110993234A) to solve the above-mentioned defects. However, the properties such as coercivity and remanence of the magnet materials with the above formulas still cannot reach the theoretical values of the magnetic properties.

How to further optimize the formula of magnet materials to obtain a neodymium-iron-boron magnet material with higher comprehensive performance of coercivity and remanence is a technical problem that needs to be solved urgently.

### SUMMARY OF THE INVENTION

In order to overcome the defect relating low magnetic properties of the neodymium-iron-boron magnet materials containing Al and Cu in the prior art, the invention provides a neodymium-iron-boron magnet material, a preparation method and application thereof. In the present invention, by further optimizing the formula of the neodymium-iron-boron magnet material, the coercivity of the neodymium-iron-boron magnet material prepared is significantly improved while maintaining higher remanence and squareness.

The invention solves the above-mentioned technical problem mainly through the following technical solutions.

The invention provides a neodymium-iron-boron magnet material, comprising the following components of:
28-33 wt% of R, wherein R is a rare earth element, and R comprises 27-31.5 wt% of Nd;
0.30-1.3 wt% of Al;
0.35-0.6 wt% of Cu;
more than 0 wt% - less than or equal to 0.74 wt% of Co;
0.98-1.2 wt% of B;
62-69 wt% of Fe, wherein
wt% is a percentage of the mass of respective component in the total mass of the neodymium-iron-boron magnet material;
the neodymium-iron-boron magnet material comprises Nb, and a mass content of Nb satisfies the following condition: (Pr+Co) wt% ≤ (1+Nb) wt%.

In the invention, the content of R is preferably 29-32.5wt%, such as 29.3wt%, 29.5wt%, 29.7wt%, 30.5wt%, 30.6wt%, 31.3wt%, 31.4wt%, 31.9wt%, 32wt% or 32.3wt%, wherein wt% is the mass percentage of R in the total mass of the neodymium-iron-boron magnet material.

In the invention, the content of Nd is preferably 27.5-31wt%, such as 28.3wt%, 28.9wt%, 29.1wt%, 29.3wt%, 29.5wt%, 29.7wt%, 29.8wt%, 30.2wt%, 30.5wt% or 30.7wt.%, wherein wt% is the mass percentage of Nd in the total mass of the neodymium-iron-boron magnet material.

In the invention, the content of Pr is preferably 0-0.3wt%, such as 0.1wt% or 0.2wt%, wherein wt% is the mass percentage of Pr in the total mass of the neodymium-iron-boron magnet material.

In the present invention, those skilled in the art know that the (Pr +Co) wt% ≤ (1+Nb) wt% generally means that the sum of the mass percentage of Pr and the mass percentage of Co in the neodymium-iron-boron magnet material is less than or equal to the sum of the mass percentage of Nb and 1wt%.

In the invention, the total content of the Pr and the Co is preferably 0.9wt% or less, excluding 0wt%, such as 0.25wt%, 0.5wt%, 0.6wt%, 0.7wt% or 0.8wt%, wherein wt% is the mass percentage of the Pr and the Co in the total mass of the neodymium-iron-boron magnet material.

In the present invention, the neodymium-iron-boron magnet material preferably further comprises RH, wherein the RH is a heavy rare earth element.

Wherein, the RH has a conventional content in this field, which is preferably 0.5-3wt%, such as 0.6wt%, 0.9wt%, 1wt%, 1.2wt%, 1.4wt%, 1.5wt%, 1.7wt%, 2wt%, 2.3wt% or 2.5wt%, wherein wt% is the mass percentage of RH in the total mass of the neodymium-iron-boron magnet material.

Wherein, the RH can be conventional in this field, and preferably is Dy and /or Tb.

When the RH comprises Dy, the content of Dy is preferably 0.2-2.5wt%, such as 0.9wt%, 1.4wt%, 1.5wt%, 1.7wt% or 2.3wt%, wherein wt% is the mass percentage of Dy in the total mass of the neodymium-iron-boron magnet material.

When the RH comprises Tb, the content of Tb is preferably 0.5-2.5wt%, such as 0.6wt%, 1.2wt% or 2wt%, wherein wt% is the mass percentage of Tb in the total mass of the neodymium-iron-boron magnet material.

In the invention, the content of Nb is preferably 0.25-0.6wt%, such as 0.26wt%, 0.3wt%, 0.35wt% or 0.55wt%, wherein wt% is the mass percentage of Nb in the total mass of the neodymium-iron-boron magnet material.

In the invention, the content of Al is preferably 0.45-1.2wt%, such as 0.46wt%, 0.61wt%, 0.65wt%, 0.7wt% or 1.15wt%, wherein wt% is the mass percentage of Al in the total mass of the neodymium-iron-boron magnet material.

In the invention, the content of Cu is preferably 0.35-0.45wt%, such as 0.36wt%, 0.37wt%, 0.38wt%, 0.39wt%, 0.4wt% or 0.42wt%, wherein wt% is the mass percentage of Cu in the total mass of the neodymium-iron-boron magnet material.

In the invention, the content of Co is preferably 0.7wt% or less, excluding 0wt%, such as 0.2wt%, 0.25wt%, 0.5wt% or 0.6wt%, wherein wt% is the mass percentage of Co in the total mass of the neodymium-iron-boron magnet material.

In the invention, the content of B is preferably 0.98-1.05wt%, such as 0.99wt%, 1wt%, 1.01wt% or 1.02wt%, wherein wt% is the mass percentage of B in the total mass of the neodymium-iron-boron magnet material.

In the invention, the content of Fe is preferably 64-68wt%, such as 64.34wt%, 65.07wt%, 65.22wt%, 65.33wt%, 65.75wt%, 65.85wt%, 65.91wt.%, 66.31wt%, 66.83wt%, 66.98wt%, 67.64wt%, 67.74wt%, 67.84wt%, 67.94wt% or 67.95wt%, wherein wt% is the mass percentage of Fe in the total mass of the neodymium-iron-boron magnet material.

In the invention, the neodymium-iron-boron magnet material preferably further comprises a NbₓCo_{y} phase. Based on the total moles of the Nb and the Co in the NbₓCo_{y} phase being 100%, x is 30-40%, and y is 60-70%. The NbₓCo_{y} phase is located in a grain boundary phase, wherein a ratio of the area of the NbₓCo_{y} phase to the total area of the grain boundary phase is 3-6%. Wherein, x or y in the NbₓCo_{y} phase respectively refers to the percentage of the moles of Nb or Co in the total moles of "Nb and Co".

In the invention, the area of the NbₓCo_{y} phase or the total area of the grain boundary phase respectively refers to the area thereof occupied in the vertical orientation plane of the detected neodymium-iron-boron magnet material during FE-EPMA testing.

Wherein, the x is, for example, 32%, 33%, 34%, 35% or 39%.

Wherein, the y is, for example, 61%, 62%, 65%, 66%, 67% or 68%.

In the invention, the ratio of the area of the NbₓCo_{y} phase to the total area of the grain boundary phase is preferably 4-4.5%, such as 4.1%, 4.2%, 4.3% or 4.4%.

The inventor speculated that the NbₓCo_{y} phase with a specific content existing in the grain boundary phase can pin the grain boundary and thus can significantly prevent grain growth, thereby improving the coercivity of the neodymium-iron-boron magnet material.

In the invention, the grain boundary phase can be a commonly understood meaning in this field, generally referring to the region formed by a two-particle grain boundary phase and an intergranular triangular region. The two-particle grain boundary phase is generally a grain boundary phase between two main phase particles.

In a preferable example of the invention, the neodymium-iron-boron magnet material comprises the following components of: 29.7wt% of Nd, 1.7wt% of Dy, 0.61wt% of Al, 0.4wt% of Cu, 0.6wt% of Co, 0.25wt% of Nb, 0.99wt% of B and 65.75wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.5%.

In a preferable example of the invention, the neodymium-iron-boron magnet material comprises the following components of: 29.8wt% of Nd, 0.1wt% of Pr, 1.4wt% of Dy, 0.46wt% of Al, 0.38wt% of Cu, 0.7wt% of Co, 0.25wt% of Nb, 1wt% of B and 65.91wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%.

In a preferable example of the invention, the neodymium-iron-boron magnet material comprises the following components of: 30.2wt% of Nd, 1.7wt% of Dy, 0.61wt% of Al, Cu 0.38wt% of Cu, 0.6wt% of Co, 0.3wt% of Nb, 0.99wt% of B and 65.22wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.5%.

In a preferable example of the invention, the neodymium-iron-boron magnet material comprises the following components of: 29.3wt% ofNd, 0.3wt% of Pr, 2.3wt% of Dy, 0.61wt% of Al, 0.39wt% of Cu, 0.5wt% of Co, 0.26wt% of Nb, 1.01wt% of B and 65.33wt% of Fe, wherein wt% is a mass percentage of respective component in the total mass of the neodymium-iron-boron magnet material; the neodymium-iron-boron magnet material comprises a Nb₃₃Co₆₇ phase in the grain boundary phase, and the ratio of the area of the Nb₃₃Co₆₇ phase to the total area of the grain boundary phase is 4.3%.

In a preferable example of the invention, the neodymium-iron-boron magnet material comprises the following components of: 30.7wt% of Nd, 0.1wt% of Pr, 1.5wt% of Dy, 1.15wt% of Al, 0.37wt% of Cu, 0.6wt% of Co, 0.25wt% of Nb, 0.99wt% of B and 64.34wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%.

In a preferable example of the invention, the neodymium-iron-boron magnet material comprises the following components of: 28.9wt% of Nd, 0.6wt% of Tb, 0.46wt% of Al, 0.36wt% of Cu, 0.5wt% of Co, 0.26wt% of Nb, 0.98wt% of B and 67.94wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.5%.

In a preferable example of the invention, the neodymium-iron-boron magnet material comprises the following components of: 28.3wt% of Nd, 1.2wt% of Tb, 0.45wt% of Al, 0.35wt% of Cu, 0.5wt% of Co, 0.26wt% of Nb, 0.99wt% of B and 67.95wt% of Fe, wherein wt% is a mass percentage of respective component in the total mass of the neodymium-iron-boron magnet material; the neodymium-iron-boron magnet material comprises a Nb₃₄Co₆₆ phase in the grain boundary phase, and the ratio of the area of the Nb₃₄Co₆₆ phase to the total area of the grain boundary phase is 4.5%.

In a preferable example of the invention, the neodymium-iron-boron magnet material comprises the following components of: 27wt% of Nd, 0.2wt% of Pr, 2.5wt% of Tb, 0.45wt% of Al, 0.36wt% of Cu, 0.5wt% of Co, 0.26wt% of Nb, 0.99wt% of B and 67.74wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%.

In a preferable example of the invention, the neodymium-iron-boron magnet material comprises the following components of: 27.5wt% of Nd, 2wt% of Tb, 0.45wt% of Al, 0.36wt% of Cu, 0.6wt% of Co, 0.26wt% of Nb, 0.99wt% of B and 67.84wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.3%.

In a preferable example of the invention, the neodymium-iron-boron magnet material comprises the following components of: 28.3wt% of Nd, 0.1wt% of Pr, 0.9wt% of Dy, 0.7wt% of Al, 0.42wt% of Cu, 0.7wt% of Co, 0.25wt% of Nb, 0.99wt% of B and 67.64wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%.

In a preferable example of the invention, the neodymium-iron-boron magnet material comprises the following components of: 30.5wt% of Nd, 1.5wt% of Dy, 0.65wt% of Al, 0.45wt% of Cu, 0.6wt% of Co, 0.25wt% of Nb, 0.98wt% of B and 65.07wt% of Fe, wherein wt% is a mass percentage of respective component in the total mass of the neodymium-iron-boron magnet material; the neodymium-iron-boron magnet material comprises a Nb₃₂Co₆₈ phase in the grain boundary phase, and the ratio of the area of the Nb₃₂Co₆₈ phase to the total area of the grain boundary phase is 4.3%.

In a preferable example of the invention, the neodymium-iron-boron magnet material comprises the following components of: 29.7wt% of Nd, 1.7wt% of Dy, 0.61wt% of Al, 0.4wt% of Cu, 0.5wt% of Co, 0.25wt% of Nb, 0.99wt% of B and 65.85wt% of Fe, wherein wt% is a mass percentage of respective component in the total mass of the neodymium-iron-boron magnet material; the neodymium-iron-boron magnet material comprises a Nb₃₃Co₆₇ phase in the grain boundary phase, and the ratio of the area of the Nb₃₃Co₆₇ phase to the total area of the grain boundary phase is 4.3%.

In a preferable example of the invention, the neodymium-iron-boron magnet material comprises the following components of: 29.1wt% of Nd, 1.5wt% of Tb, 0.46wt% of Al, 0.37wt% of Cu, 0.25wt% of Co, 0.35wt% of Nb, 0.99wt% of B and 66.98wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.2%.

In a preferable example of the invention, the neodymium-iron-boron magnet material comprises the following components of: 29.5wt% of Nd, 0.2wt% of Dy, 0.8wt% of Tb, 0.46wt% of Al, 0.37wt% of Cu, 0.25wt% of Co, 0.55wt% of Nb, 1.04wt% of B and 66.83wt% Fe, wherein wt% is a mass percentage of respective component in the total mass of the neodymium-iron-boron magnet material; the neodymium-iron-boron magnet material comprises a Nb₄₀Co₆₀ phase in the grain boundary phase; and the ratio of the area of the Nb₄₀Co₆₀ phase to the total area of the grain boundary phase is 4.1 %.

The invention further provides a preparation method of a neodymium-iron-boron magnet material, comprising the steps of: preparing a raw mixture comprising the respective components for the neodymium-iron-boron magnet material, and subjecting the raw mixture to smelting, casting, pulverization, shaping, sintering and aging treatments in turn.

The aging treatment includes a three-stage aging treatment, wherein, the temperature for a primary aging treatment is 850-950°C; the temperature for a secondary aging treatment is 650-700°C; and the temperature for a tertiary aging treatment is 450-550°C.

In the present invention, the temperature for the primary aging treatment is preferably 870-890°C, such as 880°C.

In the present invention, the time for the primary aging treatment may be 2-4 hours, such as 3 hours.

In the present invention, the temperature for the secondary aging treatment is preferably 660-690°C, such as 670°C.

In the present invention, the time for the secondary aging treatment is preferably 1-4 hours, such as 2 hours.

In the present invention, the temperature for the tertiary aging treatment is preferably 480-500°C, such as 490°C.

In the present invention, the time for the tertiary aging treatment is preferably 1-4 hours, such as 3 hours.

In the present invention, the preparation method generally can comprise a grain boundary diffusion treatment after the tertiary aging treatment.

Wherein, the temperature for the grain boundary diffusion treatment is preferably 850-1000°C, such as 900°C, 910°C or 920°C.

Wherein, the time for the grain boundary diffusion treatment is preferably 10-30 hours, such as 20 hours.

Wherein, the diffusion source for the grain boundary diffusion treatment is preferably a Dy metal powder and/or an alloy comprising Dy.

The mass percentage of the diffusion source in the total mass of the neodymium-iron-boron magnet material is preferably 0.3-0.5wt%, such as 0.4wt%.

In the present invention, the process for the smelting may be conventional in the field.

Wherein, the vacuum degree for the smelting is, for example, 5×10⁻²Pa.

Wherein, the temperature for the smelting is 1550°C or less, such as 1540°C.

In the present invention, the process for the casting may be conventional in the field.

Wherein, the casting process is, for example, a strip casting process.

Wherein, the temperature for the casting may be 1390-1460°C, for example, 1410°C.

Wherein, the alloy sheet obtained after the casting can have a thickness of 0.25-0.40 mm.

In the present invention, the process for the pulverization may be conventional in the field.

Wherein, the pulverization generally comprises hydrogen decrepitation and jet mill pulverization.

Wherein, the process of the hydrogen decrepitation generally comprises hydrogen absorption, dehydrogenation, and cooling treatment in turn.

The hydrogen absorption can be carried out under a condition of a hydrogen pressure of 0.085 MPa.

The dehydrogenation can be carried out under the condition of raising the temperature while evacuating, and the temperature for the dehydrogenation can be 480-520°C, for example, 500°C.

The jet mill pulverization can be carried out in a gas atmosphere with an oxidizing gas content of 100 ppm or less, and the oxidizing gas content refers to the content of oxygen and/or moisture.

After the jet mill pulverization, a lubricant such as zinc stearate is generally added. The added amount of the lubricant may be 0.05-0.15%, for example 0.12%, of the mass of the powder obtained after the jet mill pulverization.

In the present invention, the shaping can be achieved using a magnetic field shaping method.

Wherein, the magnetic field shaping can be carried out at a magnetic field strength of for example, 1.8-2.5T.

In the present invention, the process for the sintering may adopt a conventional process in the art.

Wherein, the temperature for the sintering may be 1000-1100°C, for example, 1080°C.

Wherein, the time for the sintering may be 4-8 hours, for example, 6 hours.

The invention further provides a neodymium-iron-boron magnet material prepared by the preparation method as mentioned above.

The invention further provides use of the neodymium-iron-boron magnet material as an electronic component.

On the basis of conforming to common knowledge in the field, the above-mentioned preferred conditions can be combined arbitrarily to obtain the preferred examples of the present invention.

The reagents and raw materials used in the present invention are all commercially available.

The positive effects of the present invention are as follows:
The present invention further optimizes the content of elements such as Co, Al, Cu, Pr, and Nb on the basis of the neodymium-iron-boron magnet material containing Al and Cu, the coercivity of the obtained neodymium-iron-boron magnet material is significantly improved, and the remanence and squareness thereof are at a higher level.

### DETAILED DESCRIPTION OF THE INVENTION

The present invention is further illustrated below by means of examples, but the present invention is not limited to the scope of the examples. The experimental methods not indicating specific conditions in the following examples were carried out according to the conventional methods and conditions, or were selected according to the product instructions.

### Example 1

The preparation process of the neodymium-iron-boron magnet material is as follows:
(1) Smelting:
   The raw material mixture according to the composition of the neodymium-iron-boron magnet material recorded in Table 1 was smelted in a high-frequency vacuum induction melting furnace with a vacuum degree of 5×10⁻²Pa at a smelting temperature of 1540°C.
(2) Casting:
   An alloy cast sheet having a thickness of 0.29 mm was obtained by the strip casting process, wherein the casting temperature was 1410°C.
(3) Pulverization Process: Hydrogen decrepitation and jet mill pulverization were carried out in turn.
   The process of the hydrogen decrepitation comprised hydrogen absorption, dehydrogenation, and a cooling treatment in turn. The hydrogen absorption was carried out under the condition of hydrogen pressure of 0.085 MPa, the dehydrogenation was carried out under the condition of raising the temperature while evacuating, and the dehydrogenation temperature was 500°C.
   The jet mill pulverization was performed in an atmosphere having an oxidizing gas content of 100 ppm or less. The particle size obtained by pulverization was 4.2µm, wherein, the oxidizing gas referred to oxygen or moisture content. The pressure in the grinding chamber of the jet mill was 0.68 MPa. After pulverization, a lubricant, such as zinc stearate, was added, wherein the addition of the lubricant was 0.12% of the powder weight after mixing.
(4) Magnetic Field Shaping:
   It was carried out at a magnetic field strength of 1.8-2.5T under the protection of a nitrogen atmosphere.
(5) Sintering Treatment:
   The mixture was sequentially sintered and cooled under a vacuum condition of 5×10⁻³Pa. The sintering treatment was performed at 1080°C for 6 hours. Before the cooling treatment, Ar gas can be introduced to make the pressure reach 0.05MPa.
(6) Three Aging Treatments:
   The primary aging treatment was carried out at a temperature of 880°C for 3 hours; the secondary aging treatment was carried out at a temperature of 680°C for 2 hours; the tertiary aging treatment was carried out at a temperature of 490°C for 3 hours.
(7) Grain Boundary Diffusion:
   A Dy metal powder was diffused into the magnet material obtained after the three aging treatments through grain boundary diffusion treatment (the mass of the added Dy was 0.4wt%, wt% is the mass percentage of Dy in the total mass of the neodymium-iron-boron magnet material, and the remaining content of 1.3wt% for Dy recorded in Table 1 was added during smelting), wherein the temperature for the grain boundary diffusion treatment was 910°C, and the time for the grain boundary diffusion treatment was 20 hours.

In Examples 1-5 and 10-12, and Comparative Examples 1-6, raw materials according to the formula in Table 1 below were prepared, and the temperature for the secondary aging treatment is shown in Table 1, and the rest of the preparation process was the same as that in Example 1. Wherein, the content of Dy added during grain boundary diffusion was 0.4wt%, and the remaining Dy in Table 1 was added during smelting.

In Examples 6-9, 13 and 14, raw materials according to the formula in Table 1 below were prepared, wherein the preparation process did not comprise a grain boundary diffusion treatment after the tertiary aging treatment. The temperature for the secondary aging treatment is shown in Table 1, and the rest of the preparation process was the same as that in Example 1.

### Effect Example 1

### 1. Determination of Components:

The neodymium-iron-boron magnets prepared in Examples 1-14 and Comparative Examples 1-6 were measured using a high-frequency inductively coupled plasma optical emission spectrometer (ICP-OES). The test results are shown in Table 1 below.

**Table 1 (Unit: wt%, wherein wt% is a percentage of the mass of respective element in the total mass of the neodymium-iron-boron magnet material)**

| | Nd | Pr | Dy | Tb | Al | Cu | Co | Nb | B | Fe | Whether Pr+Co ≤1+Nb is satisfied | Temper ature for Seconda ry Aging | Whether grain boundary diffusion is performed |
|---|---|---|---|---|---|---|---|---|---|---|---|---|---|
| Example 1 | 29.7 | / | 1.7 | / | 0.61 | 0.4 | 0.6 | 0.25 | 0.99 | 65.75 | Yes | 680°C | Yes |
| Example 2 | 29.8 | 0.1 | 1.4 | / | 0.46 | 0.38 | 0.7 | 0.25 | 1 | 65.91 | Yes | 650°C | Yes |
| Example 3 | 30.2 | / | 1.7 | / | 0.61 | 0.38 | 0.6 | 0.3 | 0.99 | 65.22 | Yes | 660°C | Yes |
| Example 4 | 29.3 | 0.3 | 2.3 | / | 0.61 | 0.39 | 0.5 | 0.26 | 1.01 | 65.33 | Yes | 670°C | Yes |
| Example 5 | 30.7 | 0.1 | 1.5 | / | 1.15 | 0.37 | 0.6 | 0.25 | 0.99 | 64.34 | Yes | 690°C | Yes |
| Example 6 | 28.9 | / | / | 0.6 | 0.46 | 0.36 | 0.5 | 0.26 | 0.98 | 67.94 | Yes | 660°C | No |
| Example 7 | 28.3 | / | / | 1.2 | 0.45 | 0.35 | 0.5 | 0.26 | 0.99 | 67.95 | Yes | 660°C | No |
| Example 8 | 27 | 0.2 | / | 2.5 | 0.45 | 0.36 | 0.5 | 0.26 | 0.99 | 67.74 | Yes | 660°C | No |
| Example 9 | 27.5 | / | / | 2 | 0.45 | 0.36 | 0.6 | 0.26 | 0.99 | 67.84 | Yes | 660°C | No |
| Example 10 | 28.3 | 0.1 | 0.9 | / | 0.7 | 0.42 | 0.7 | 0.25 | 0.99 | 67.64 | Yes | 670°C | Yes |
| Example 11 | 30.5 | / | 1.5 | / | 0.65 | 0.45 | 0.6 | 0.25 | 0.98 | 65.07 | Yes | 660°C | Yes |
| Example 12 | 29.7 | / | 1.7 | / | 0.61 | 0.4 | 0.5 | 0.25 | 0.99 | 65.85 | Yes | 660°C | Yes |
| Example 13 | 29.1 | / | | 1.5 | 0.46 | 0.37 | 0.25 | 0.35 | 0.99 | 66.98 | Yes | 650°C | No |
| Example 14 | 29.5 | / | 0.2 | 0.8 | 0.46 | 0.37 | 0.25 | 0.55 | 1.04 | 66.83 | Yes | 650°C | No |
| Comparative Example 1 | 29.3 | 0.3 | 2.3 | / | 0.61 | 0.4 | 0.82 | 0.08 | 1.01 | 65.18 | No | 660°C | Yes |
| Comparative Example 2 | 29.3 | 0.32 | 2.3 | / | 0.61 | 0.4 | 0.83 | 0.09 | 1.01 | 65.14 | No | 660°C | Yes |
| Comparative Example 3 | 29.3 | 0.25 | 2.3 | / | 0.61 | 0.4 | 0.83 | 0.05 | 1.01 | 65.25 | No | 660°C | Yes |
| Comparative Example 4 | 29.3 | / | 2.3 | / | 0.61 | 0.4 | 1 | 0.26 | 1.01 | 65.12 | Yes | Without three aging Treatme nts | Yes |
| Comparative Example 5 | 22.30 | 7.40 | 1.70 | / | 0.61 | 0.40 | 0.60 | 0.25 | 0.99 | 65.75 | Yes | 680°C | Yes |
| Comparative Example 6 | 29.70 | / | 1.70 | / | 0.61 | 0.20 | 0.60 | 0.25 | 0.99 | 65.95 | Yes | 680°C | Yes |

| | | | | | | | | | | | | | |
|---|---|---|---|---|---|---|---|---|---|---|---|---|---|
| Note: "/" indicates that the element is neither added nor detected. In the neodymium-iron-boron magnet materials of the above-mentioned examples and comparative examples, the value of Fe content is 100% minus the content of all other elements. Those skilled in this field know that the content of Fe comprises some unavoidable impurities introduced during the preparation process. | | | | | | | | | | | | | |

### 2. Testing for Magnetic Performance

At room temperature 20°C, the neodymium-iron-boron magnet materials prepared in Examples 1-14 and Comparative Examples 1-5 were tested by using a PFM pulsed BH demagnetization curve testing equipment to obtain the data of remanence (Br), intrinsic coercivity (Hcj), maximum energy product (BHmax) and squareness (Hk/Hcj). The testing results are shown in Table 2 below.

### 3. Testing for Microstructures

### FE-EPMA Detection:

The vertically oriented faces of the neodymium-iron-boron magnet materials prepared in Examples 1-14 and Comparative Examples 1-6 were polished, and tested by using a Field Emission Electron Probe Microanalyzer (FE-EPMA) (JEOL, 8530F). Firstly, the distribution of Nb and Co elements in the neodymium-iron-boron magnet materials was determined by surface scanning using FE-EPMA. Then, the molar contents of Nb and Co in the NbₓCo_{y} phase were determined by single-point quantitative analysis using FE-EPMA. The test conditions included an accelerating voltage of 15kv and a probe beam current of 50 nA. The testing results are shown in Table 2 below.

Wherein, the proportion of the area of NbₓCo_{y} phase refers to the ratio of the area of the NbₓCo_{y} phase in the cross-section (that is, the vertically oriented face as mentioned above) of the neodymium-iron-boron magnet material to the total area of the grain boundary phase in the cross-section.

**Table 2**

| | **Br (kGs)** | **Hcj (kOe)** | **BHmax (MGOe)** | **Hk/Hcj** | **NbₓCo_{y} Phase** | **Proportio n of Area of NbₓCo_{y} Phase(%)** |
|---|---|---|---|---|---|---|
| Example 1 | 13.43 | 27.2 | 42.9 | 0.99 | Nb₃₅Co₆₅ | 4.5 |
| Example 2 | 13.66 | 25.6 | 44.4 | 0.99 | Nb₃₅Co₆₅ | 4.4 |
| Example 3 | 13.44 | 26.7 | 43 | 0.98 | Nb₃₉Co₆₁ | 4.5 |
| Example 4 | 13.11 | 28.9 | 40.9 | 0.99 | Nb₃₃Co₆₇ | 4.3 |
| Example 5 | 12.77 | 29.7 | 38.8 | 0.99 | Nb₃₅Co₆₅ | 4.4 |
| Example 6 | 14.36 | 23.7 | 49.1 | 0.99 | Nb₃₉Co₆₁ | 4.5 |
| Example 7 | 14.23 | 26.3 | 48.2 | 0.99 | Nb₃₄Co₆₆ | 4.5 |
| Example 8 | 13.9 | 31.9 | 46 | 0.99 | Nb₃₅Co₆₅ | 4.4 |
| Example 9 | 14.06 | 29.7 | 47.1 | 0.98 | Nb₃₅Co₆₅ | 4.3 |
| Example 10 | 14.05 | 24.7 | 47 | 0.99 | Nb₃₅Co₆₅ | 4.4 |
| Example 11 | 13.31 | 27.20 | 42.18 | 0.99 | Nb₃₂Co₆₈ | 4.3 |
| Example 12 | 13.43 | 27.2 | 42.9 | 0.99 | Nb₃₃Co₆₇ | 4.3 |
| Example 13 | 13.9 | 28 | 46 | 0.99 | Nb₃₉Co₆₁ | 4.2 |
| Example 14 | 14.01 | 25 | 46.7 | 0.99 | Nb₄₀Co₆₀ | 4.1 |
| Comparative Example 1 | 13.10 | 26.50 | 40.86 | 0.98 | Nb₃₅Co₆₅ | 1.7 |
| Comparative Example 2 | 13.06 | 26.9 | 40.6 | 0.99 | Nb₃₅Co₆₅ | 1.9 |
| Comparative Example 3 | 13.06 | 26.9 | 40.6 | 0.99 | Nb₃₃Co₆₅ | 1.6 |
| Comparative Example 4 | 13.07 | 26.8 | 40.7 | 0.96 | / | / |
| Comparative Example 5 | 13.32 | 26.1 | 42.2 | 0.97 | / | / |
| Comparative Example 6 | 13.38 | 24.7 | 42.6 | 0.94 | / | / |

| | | | | | | |
|---|---|---|---|---|---|---|
| Note: The % for the value in the subscript of NbₓCo_{y} phase in the table is omitted. | | | | | | |

From the above experimental data, it can be seen that the coercivity of the neodymium-iron-boron magnet materials is significantly improved compared with the prior art by utilizing a specific contents of Co, Al, Cu, Pr, Nb and other elements in combination with a specific three aging treatments in the preparation process, and the remanence and squareness of the magnet materials are all at a relatively high level. According to the further results of microscopic detection, this may be due to: in the invention, by optimizing the formula of the neodymium-iron-boron magnet material, a specific content of NbₓCo_{y} phase is formed in the grain boundary phase of the neodymium-iron-boron magnet material prepared, which can optimize the grain boundary phase and improve the coercivity.

## Claims

1. A neodymium-iron-boron magnet material, **characterized by** comprising the following components of:
28-33 wt% of R, wherein R is a rare earth element, and R comprises 27-31.5 wt% of Nd;
0.30-1.3 wt% of Al;
0.35-0.6 wt% of Cu;
more than 0 wt% - less than or equal to 0.74 wt% of Co;
0.98-1.2 wt% of B;
62-69 wt% of Fe, wherein
wt% is a percentage of the mass of respective component in the total mass of the neodymium-iron-boron magnet material;
the neodymium-iron-boron magnet material comprises Nb, and a mass content of Nb satisfies the following condition: (Pr+Co) wt% ≤ (1+Nb) wt%.

2. The neodymium-iron-boron magnet material according to claim 1, **characterized in that**:
the content of R is 29-32.5wt%, such as 29.3wt%, 29.5wt%, 29.7wt%, 30.5wt%, 30.6wt%, 31.3wt%, 31.4wt%, 31.9wt%, 32wt% or 32.3wt%, wherein wt% is the mass percentage of R in the total mass of the neodymium-iron-boron magnet material; and/or
the content of Nd is 27.5-31wt%, such as 28.3wt%, 28.9wt%, 29.1wt%, 29.3wt%, 29.5wt%, 29.7wt%, 29.8wt%, 30.2wt%, 30.5wt% or 30.7wt.%, wherein wt% is the mass percentage of Nd in the total mass of the neodymium-iron-boron magnet material; and/or
the content of Pr is 0-0.3wt%, such as 0.1wt% or 0.2wt%, wherein wt% is the mass percentage of Pr in the total mass of the neodymium-iron-boron magnet material; and/or
the total content of the Pr and the Co is 0.9wt% or less, excluding 0 wt%, such as 0.25wt%, 0.5wt%, 0.6wt%, 0.7wt% or 0.8wt%, wherein wt% is the mass percentage of Pr and Co in the total mass of the neodymium-iron-boron magnet material; and/or
the neodymium-iron-boron magnet material further comprises RH, wherein the RH is a heavy rare earth element;
wherein, the content of RH is preferably 0.5-3wt%, such as 0.6wt%, 0.9wt%, 1wt%, 1.2wt%, 1.4wt%, 1.5wt%, 1.7wt%, 2wt%, 2.3wt% or 2.5wt%, wherein wt% is the mass percentage of RH in the total mass of the neodymium-iron-boron magnet material;
wherein, the RH is such as Dy and /or Tb; when the RH comprises Dy, the content of Dy is preferably 0.2-2.5wt%, such as 0.2wt%, 0.9wt%, 1.4wt%, 1.5wt%, 1.7wt% or 2.3wt%, wherein wt% is the mass percentage of Dy in the total mass of the neodymium-iron-boron magnet material;
when the RH comprises Tb, the content of Tb is preferably 0.5-2.5wt%, such as 0.6wt%, 1.2wt% or 2wt%, wherein wt% is the mass percentage of Tb in the total mass of the neodymium-iron-boron magnet material.

3. The neodymium-iron-boron magnet material according to claim 1, **characterized in that**:
the content of Nb is 0.25-0.6wt%, such as 0.26wt%, 0.3wt%, 0.35wt% or 0.55wt%, wherein wt% is the mass percentage of Nb in the total mass ofthe neodymium-iron-boron magnet material; and/or
the content of Al is 0.45-1.2wt%, such as 0.46wt%, 0.61wt%, 0.65wt%, 0.7wt% or 1.15wt%, wherein wt% is the mass percentage of Al in the total mass of the neodymium-iron-boron magnet material; and/or
the content of Cu is 0.35-0.45wt%, such as 0.36wt%, 0.37wt%, 0.38wt%, 0.39wt%, 0.4wt% or 0.42wt%, wherein wt% is the mass percentage of Cu in the total mass of the neodymium-iron-boron magnet material; and/or
the content of Co is 0.7wt% or less, excluding 0wt%, such as 0.2wt%, 0.25wt%, 0.5wt% or 0.6wt%, wherein wt% is the mass percentage of Co in the total mass of the neodymium-iron-boron magnet material; and/or
the content of B is preferably 0.98-1.05wt%, such as 0.99wt%, 1wt%, 1.01wt% or 1.02wt%, wherein wt% is the mass percentage of B in the total mass of the neodymium-iron-boron magnet material; and/or
the content of Fe is 64-68wt%, such as 64.34wt%, 65.07wt%, 65.22wt%, 65.33wt%, 65.75wt%, 65.85wt%, 65.91wt.%, 66.31wt%, 66.83wt%, 66.98wt%, 67.64wt%, 67.74wt%, 67.84wt%, 67.94wt% or 67.95wt%, wherein wt% is the mass percentage of Fe in the total mass of the neodymium-iron-boron magnet material.

4. The neodymium-iron-boron magnet material according to any one of claims 1-3, **characterized in that**:
the neodymium-iron-boron magnet material comprises a NbₓCo_{y} phase, wherein based on the total moles of the Nb and the Co in the NbₓCo_{y} phase being 100%, x is 30-40%, and y is 60-70%, and the x is, for example, 32%, 33%, 34%, 35% or 39%, and the y is, for example, 61%, 62%, 65%, 66%, 67% or 68%;
the NbₓCo_{y} phase is located in a grain boundary phase, wherein a ratio of the area of the NbₓCo_{y} phase to the total area of the grain boundary phase is 3-6%, preferably 4-4.5%, such as 4.1%, 4.2%, 4.3% or 4.4%; the area of the NbₓCo_{y} phase or the total area of the grain boundary phase respectively refers to the area thereof occupied in the vertical orientation plane of the detected neodymium-iron-boron magnet material.

5. The neodymium-iron-boron magnet material according to claim 1, **characterized in that**:
the neodymium-iron-boron magnet material comprises the following components of: 29.7wt% of Nd, 1.7wt% of Dy, 0.61wt% of Al, 0.4wt% of Cu, 0.6wt% of Co, 0.25wt% of Nb, 0.99wt% of B and 65.75wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.5%; or
the neodymium-iron-boron magnet material comprises the following components of: 29.8wt% of Nd, 0.1wt% of Pr, 1.4wt% of Dy, 0.46wt% of Al, 0.38wt% of Cu, 0.7wt% of Co, 0.25wt% of Nb, 1wt% of B and 65.91wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%; or
the neodymium-iron-boron magnet material comprises the following components of: 30.2wt% of Nd, 1.7wt% of Dy, 0.61wt% of Al, Cu 0.38wt% of Cu, 0.6wt% of Co, 0.3wt% of Nb, 0.99wt% of B and 65.22wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.5%; or
the neodymium-iron-boron magnet material comprises the following components of: 29.3wt% of Nd, 0.3wt% of Pr, 2.3wt% of Dy, 0.61wt% of Al, 0.39wt% of Cu, 0.5wt% of Co, 0.26wt% of Nb, 1.01wt% of B and 65.33wt% of Fe, wherein wt% is a mass percentage of respective component in the total mass of the neodymium-iron-boron magnet material; the neodymium-iron-boron magnet material comprises a Nb₃₃Co₆₇ phase in the grain boundary phase, and the ratio of the area of the Nb₃₃Co₆₇ phase to the total area of the grain boundary phase is 4.3%; or
the neodymium-iron-boron magnet material comprises the following components of: 30.7wt% of Nd, 0.1wt% of Pr, 1.5wt% of Dy, 1.15wt% of Al, 0.37wt% of Cu, 0.6wt% of Co, 0.25wt% of Nb, 0.99wt% of B and 64.34wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%; or
the neodymium-iron-boron magnet material comprises the following components of: 28.9wt% of Nd, 0.6wt% of Tb, 0.46wt% of Al, 0.36wt% of Cu, 0.5wt% of Co, 0.26wt% of Nb, 0.98wt% of B and 67.94wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.5%; or
the neodymium-iron-boron magnet material comprises the following components of: 28.3wt% of Nd, 1.2wt% of Tb, 0.45wt% of Al, 0.35wt% of Cu, 0.5wt% of Co, 0.26wt% of Nb, 0.99wt% of B and 67.95wt% of Fe, wherein wt% is a mass percentage of respective component in the total mass of the neodymium-iron-boron magnet material; the neodymium-iron-boron magnet material comprises a Nb₃₄Co₆₆ phase in the grain boundary phase, and the ratio of the area of the Nb₃₄Co₆₆ phase to the total area of the grain boundary phase is 4.5%; or
the neodymium-iron-boron magnet material comprises the following components of: 27wt% of Nd, 0.2wt% of Pr, 2.5wt% of Tb, 0.45wt% of Al, 0.36wt% of Cu, 0.5wt% of Co, 0.26wt% of Nb, 0.99wt% of B and 67.74wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%; or
the neodymium-iron-boron magnet material comprises the following components of: 27.5wt% of Nd, 2wt% of Tb, 0.45wt% of Al, 0.36wt% of Cu, 0.6wt% of Co, 0.26wt% of Nb, 0.99wt% of B and 67.84wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.3%; or
the neodymium-iron-boron magnet material comprises the following components of: 28.3wt% of Nd, 0.1wt% of Pr, 0.9wt% of Dy, 0.7wt% of Al, 0.42wt% of Cu, 0.7wt% of Co, 0.25wt% of Nb, 0.99wt% of B and 67.64wt% of Fe, wherein wt% is a mass percentage of respective component in the total mass of the neodymium-iron-boron magnet material; the neodymium-iron-boron magnet material comprises a Nb₃₅Co₆₅ phase in the grain boundary phase, and the ratio of the area of the Nb₃₅Co₆₅ phase to the total area of the grain boundary phase is 4.4%; or
the neodymium-iron-boron magnet material comprises the following components of: 30.5wt% of Nd, 1.5wt% of Dy, 0.65wt% of Al, 0.45wt% of Cu, 0.6wt% of Co, 0.25wt% of Nb, 0.98wt% of B and 65.07wt% of Fe, wherein wt% is a mass percentage of respective component in the total mass of the neodymium-iron-boron magnet material; the neodymium-iron-boron magnet material comprises a Nb₃₂Co₆₈ phase in the grain boundary phase, and the ratio of the area of the Nb₃₂Co₆₈ phase to the total area of the grain boundary phase is 4.3%; or
the neodymium-iron-boron magnet material comprises the following components of: 29.7wt% of Nd, 1.7wt% of Dy, 0.61wt% of Al, 0.4wt% of Cu, 0.5wt% of Co, 0.25wt% of Nb, 0.99wt% of B and 65.85wt% of Fe, wherein wt% is a mass percentage of respective component in the total mass of the neodymium-iron-boron magnet material; the neodymium-iron-boron magnet material comprises a Nb₃₃Co₆₇ phase in the grain boundary phase, and the ratio of the area of the Nb₃₃Co₆₇ phase to the total area of the grain boundary phase is 4.3%; or
the neodymium-iron-boron magnet material comprises the following components of: 29.1wt% of Nd, 1.5wt% of Tb, 0.46wt% of Al, 0.37wt% of Cu, 0.25wt% of Co, 0.35wt% of Nb, 0.99wt% of B and 66.98wt% of Fe, wherein wt% is a mass percentage of respective component in the total mass of the neodymium-iron-boron magnet material; the neodymium-iron-boron magnet material comprises a Nb₃₉Co₆₁ phase in the grain boundary phase, and the ratio of the area of the Nb₃₉Co₆₁ phase to the total area of the grain boundary phase is 4.2%; or
the neodymium-iron-boron magnet material comprises the following components of: 29.5wt% of Nd, 0.2wt% of Dy, 0.8wt% of Tb, 0.46wt% of Al, 0.37wt% of Cu, 0.25wt% of Co, 0.55wt% of Nb, 1.04wt% of B and 66.83wt% Fe, wherein wt% is a mass percentage of respective component in the total mass of the neodymium-iron-boron magnet material; the neodymium-iron-boron magnet material comprises a Nb₄₀Co₆₀ phase in the grain boundary phase; and the ratio of the area of the Nb₄₀Co₆₀ phase to the total area of the grain boundary phase is 4.1%.

6. A preparation method of a neodymium-iron-boron magnet material, **characterized by** comprising the steps of preparing a raw mixture comprising the respective components for the neodymium-iron-boron magnet material according to any one of claims 1-3 and 5, and subjecting the raw mixture to smelting, casting, pulverization, shaping, sintering and aging treatments in turn;
the aging treatment includes a three-stage aging treatment, wherein, the temperature for a primary aging treatment is 850-950°C; the temperature for a secondary aging treatment is 650-700°C; and the temperature for a tertiary aging treatment is 450-550°C.

7. The preparation method of the neodymium-iron-boron magnet material according to claim 6, **characterized in that**:
the temperature for the primary aging treatment is 870-890°C, such as 880°C; and/or
the time for the primary aging treatment is 2-4 hours, such as 3 hours; and/or
the temperature for the secondary aging treatment is 660-690°C, such as 670°C or 680°C; and/or
the time for the secondary aging treatment is 1-4 hours, such as 2 hours; and/or
the temperature for the tertiary aging treatment is 480-500°C, such as 490°C; and/or
the time for the tertiary aging treatment is 1-4 hours, such as 3 hours; and/or
the preparation method further comprises a grain boundary diffusion treatment after the tertiary aging treatment;
wherein, the temperature for the grain boundary diffusion treatment is preferably 850-1000°C, such as 900°C, 910°C or 920°C;
wherein, the time for the grain boundary diffusion treatment is preferably 10-30 hours, such as 20 hours;
wherein, the diffusion source for the grain boundary diffusion treatment is preferably a Dy metal powder and/or an alloy comprising Dy; and a mass percentage of the diffusion source in the total mass of the neodymium-iron-boron magnet material is preferably 0.3-0.5wt%, such as 0.4wt%.

8. The preparation method of the neodymium-iron-boron magnet material according to claim 6 or 7, **characterized in that**:
the vacuum degree for the smelting is 5×10⁻²Pa; and/or
the temperature for the smelting is 1550°C or less, such as 1540°C; and/or
the casting process is a strip casting process; and/or
the temperature for the casting is 1390-1460°C, such as 1410°C; and/or
the alloy sheet obtained after the casting has a thickness of 0.25-0.40 mm, such as 0.29mm; and/or
the pulverization comprises hydrogen decrepitation and jet mill pulverization in turn;
wherein, the process of the hydrogen decrepitation preferably comprises hydrogen absorption, dehydrogenation, and a cooling treatment in turn; the hydrogen absorption is carried out under a condition of a hydrogen pressure of 0.085 MPa; the temperature for the dehydrogenation is for example 480-520°C, such as 500°C;
wherein, the jet mill pulverization is carried out in a gas atmosphere preferably with an oxidizing gas content of 100 ppm or less, and the oxidizing gas content refers to the content of oxygen and/or moisture;
wherein, after the jet mill pulverization, a lubricant such as zinc stearate is preferably added, wherein the added amount of the lubricant is preferably 0.05-0.15%, such as 0.12% of the mass of the powder obtained after the jet mill pulverization; and/or
the shaping is a magnetic field shaping, wherein, the magnetic field shaping is carried out at magnetic field strength of such as 1.8-2.5T; and/or
the temperature for the sintering is 1000-1100°C, such as 1080°C; and/or
the time for the sintering is 4-8 hours, such as 6 hours.

9. A neodymium-iron-boron magnet material prepared by the preparation method of the neodymium-iron-boron magnet material according to any one of claims 6-8.

10. Use of the neodymium-iron-boron magnet material according to any one of claims 1-5 and 9 as an electronic component.
